# EUROPEAN PATENT APPLICATION

(11) **EP 4 525 119 A1**
(43) Date of publication of application: **19.03.2025**
(21) Application number: 23802861.7
(22) Date of filing: 08.05.2023
(51) Int. Cl.: H01M 10/0567

(54) **ELECTROLYTE ADDITIVE, BATTERY ELECTROLYTE AND USE THEREOF**

(30) Priority: 12.05.2022 CN 202210514679
(71) Applicant: Shenzhen Innovazone Technology Co., Ltd., Shenzhen, Guangdong 518000 (CN); Qujing Innovazone Technology Co., Ltd., Qujing, Yunnan 655000 (CN); Foshan Innovazone Technology Co., Ltd., Foshan, Guangdong 528000 (CN)
(72) Inventor: LIN, Lvhuan, Shenzhen, Guangdong 518000 (CN); WAN, Yuanxin, Shenzhen, Guangdong 518000 (CN); KONG, Lingyong, Shenzhen, Guangdong 518000 (CN); WANG, Min, Shenzhen, Guangdong 518000 (CN)
(74) Representative: MERH-IP Matias Erny Reichl Hoffmann Patentanwälte PartG mbB
(86) International application number: PCT/CN2023/092814
(87) International publication number: WO 2023/217091

(57) **Abstract**

An electrolyte additive, battery electrolyte, and application thereof are provided. The electrolyte additive includes a radical trapping agent. The radical trapping agent includes at least one of a structural formula I and a structural formula II. The radical trapping agent of the provided structural formulas I-II can stably carry nitrogen free radicals or oxygen free radicals. Therefore, when used in the electrolyte, the electrolyte additive can consume harmful groups, such as CH₃· free radicals, acyl free radicals, and CH₃O· free radicals, generated during the charging and discharging process of the secondary battery, and can effectively inhibit the generation of active oxygen in the cathode additive of the secondary battery. In this way, the gas production phenomenon of the secondary battery during the charging and discharging process is effectively inhibited, the gas production volume is significantly reduced, and the volume expansion of the secondary battery is reduced, thereby effective improving the stability and safety of the charging and discharging of the secondary battery.

## Description

The present application claims priority of the Chinese patent application filed with the China Patent Office on May 12, 2022, with an application number 202210514679.0 and titled "ELECTROLYTE ADDITIVE, BATTERY ELECTROLYTE, AND APPLICATION THEREOF", the entire contents of which are incorporated by reference in the present application.

### TECHNICAL FIELD

The present application relates to the technical field of batteries, more particularly to an electrolyte additive, a battery electrolyte, and an application thereof.

### BACKGROUND

During the initial charge (i.e., formation) of a lithium-ion battery, a solid electrolyte membrane (SEI membrane) will form at an interface between an electrolyte and each of a cathode and an anode. Although the formation of this irreversible SEI membrane will consume the electrolyte and Li+ released from the cathode material and cause an irreversible capacity loss and a decrease in the initial coulombic efficiency, the organic solvent insolubility of the SEI membrane also plays a good protective role for the cathode and anode materials, which avoids damage to the electrode materials caused by the co-embedding of solvent molecules, and thus greatly improves the cycle performance and service life of the lithium-ion battery. In addition to the large amount of gas generated during the formation stage of the SEI membrane, a certain amount of gas will also be inevitably generated during actual use of the lithium-ion battery. The gas generated inside the battery and the accumulated pressure will cause problems such as volume expansion and increased impedance of the battery. Moreover, under abnormal conditions such as over-charging, over-discharging, and high temperature, the gas production volume of the battery will further increase greatly. The produced gas is both toxic and explosive, which is an important cause of battery safety problems. Therefore, solving the technical problem of large gas production volume in the lithium-ion battery during the formation and use stages is of great significance to improve the safety performance of the battery.

To solve the above-mentioned gas production problem of lithium-ion batteries, a typical method currently used include using an anhydride compound, a cyclic ester, such as γ-butyrolactone, and polynitrile compound as additives, which are add to the electrolyte to form the cathode and anode protective films to inhibit gas production. However, these measures often have problems such as poor ion conductivity of the protective film, increased impedance, and instability of the cathode and anode protective films.

In addition, in order to improve the problem of low coulomb efficiency caused by irreversible loss of the anode, researchers have developed lithium-supplementing technology, including cathode lithium-supplementing technology and anode lithium-supplementing technology; in which, the cathode lithium-supplementing technology is to add a small amount of high-capacity material (i.e., cathode lithium-supplementing additive) during the cathode slurry process. During the charging process, Li+ is released from the high-capacity material to supplement the irreversible capacity loss of the initial charge and discharge. At present, the materials used as cathode lithium-supplementing additives mainly include: lithium-rich compounds, nanocomposites based on conversion reactions, and binary lithium compounds. However, it is found in researches and practical applications that the use of existing lithium-supplementing additives also leads to the problem of increased gas production in the lithium-ion battery during the formation stage, which will cause gas expansion inside the closed battery system, causing volume expansion and safety issues of the battery.

Therefore, there is no good solution to effectively improve the problem of lithium ion gas production without affecting other battery properties.

### SUMMARY

It is an objective of the present application to provide an electrolyte additive, a battery electrolyte, and an application thereof, which aim to solve the problem that the secondary battery in the prior art has a relatively large gas production volume during use, which may affect the battery performance.

The technical solutions adopted in the embodiments of the present application are as follows:
In a first aspect, an electrolyte additive is provided. The electrolyte additive comprises a radical trapping agent, and the radical trapping agent comprises at least one of a structural formula I and a structural formula II as follows: 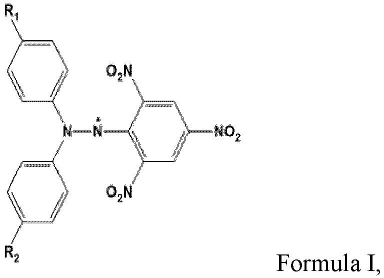 and 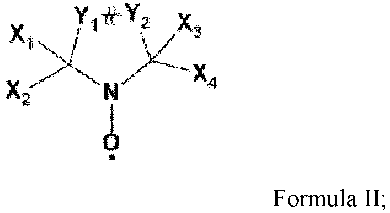 in which, in the structural formula I, R₁ and R₂ are same or different and respectively selected from a hydrogen atom or a C1-C10 alkyl; and in the structural formula II, X₁, X₂, X₃, and X₄ are same or different and respectively selected from a C1-C15 alkyl or a substituted C1-C15 alkyl, and Y₁ and Y₂ are same or different and respectively selected from any one atom of C, N, O, S, B, or Si, or a derivative group thereof.

In an embodiment, the structural formula II comprises at least one of the following structural formulas II₁-II₄: 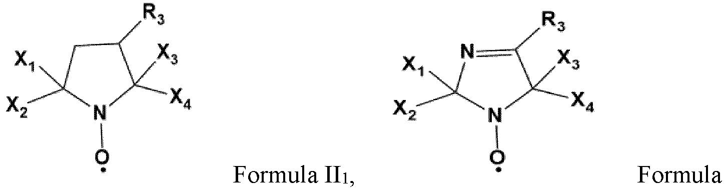 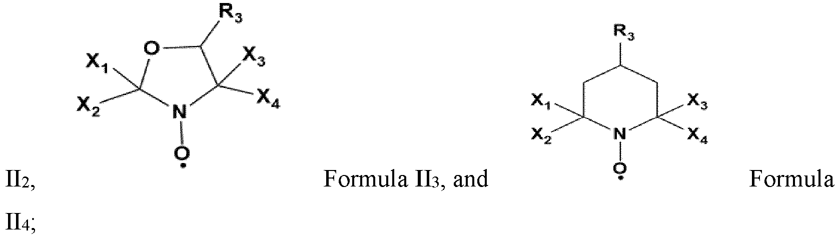 in which, R₃ is selected from any one of a hydrogen atom, a C1-C5 alkyl, a hydroxyl, a carboxyl, and a phenyl.

In an embodiment, in the structural formula I, R₁ and the R₂ are same or different and respectively selected from a C1-C5 alkyl.

In an embodiment, in the structural formula I, R₁ and the R₂ are same or different and respectively selected from at least one of a methyl, an ethyl, and a propyl.

In an embodiment, in the structural formula II, X₁, X₂, X₃, and X₄ are same or different and respectively selected from a C1-C10 alkyl.

In an embodiment, in the structural formula II, X₁, X₂, X₃, and X₄ are same or different and respectively selected from at least one of a methyl, an ethyl, and a propyl.

In an embodiment, in the structural formula II, X₁, X₂, X₃, and X₄ are same or different and respectively selected from a substituted C1-C10 alkyl.

In an embodiment, a substituent of the substituted C1-C15 alkyl comprises any one of a C1-C15 alkenyl, a carbon group, and an ether group.

In an embodiment, the radical trapping agent comprises at least one of the following structural formulas III₁-III₅:

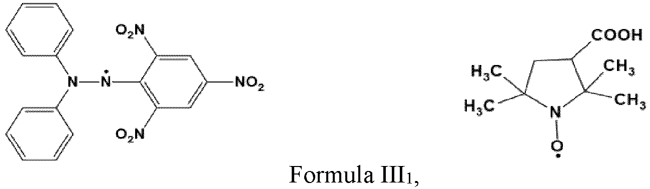

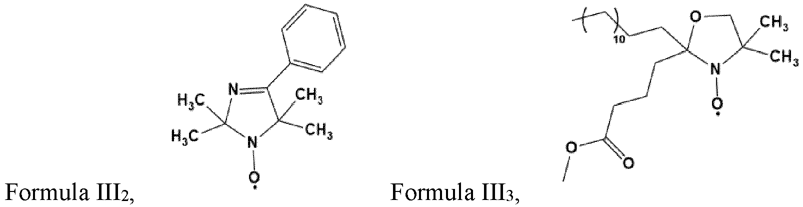

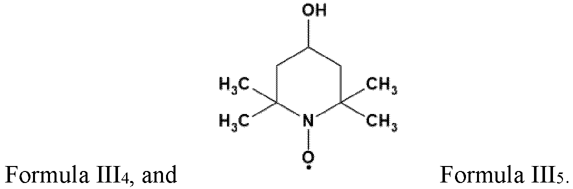

In a second aspect, an electrolyte of a secondary battery is provided. The electrolyte comprises: a metal salt electrolyte, an organic solvent, and an electrolyte additive; in which, the electrolyte additive is selected from the electrolyte additive as described in the above.

In an embodiment, based on a total mass of the electrolyte being 100 wt.%, a mass percentage of the electrolyte additive is 0.1 wt.% to 15 wt.%.

In an embodiment, based on the total mass of the electrolyte being 100 wt.%, the mass percentage of the electrolyte additive is 1 wt.% to 10 wt.%.

In an embodiment, the metal salt electrolyte comprises any one of a lithium salt electrolyte, a sodium salt electrolyte, and a potassium salt electrolyte.

In an embodiment, a concentration of the metal salt electrolyte is 0.1 mol•L⁻¹ to 10 mol•L⁻¹.

In an embodiment, the organic solvent comprises at least one of an ester organic solvent, a sulfone organic solvent, an ether organic solvent, a nitrile organic solvent, or an ionic liquid organic solvent.

In an embodiment, based on a total mass of the electrolyte being 100%, a mass percentage of the metal salt electrolyte is 10 wt.% to 30 wt.%, and a mass percentage of the organic solvent is 55 wt.% to 75 wt.%.

In a third aspect, a method for preparing an electrolyte of a secondary battery is provided. The method comprises the following steps:
providing a metal salt electrolyte, an organic solvent, and the electrolyte additive according to the electrolyte of the second battery;
performing a first mixing treatment on the organic solvent and the electrolyte additive to obtain an electrolyte additive solution; and
performing a second mixing treatment of the metal salt electrolyte and the electrolyte additive solution to obtain the electrolyte of the secondary battery.

In a fourth aspect, a secondary battery is provided. The secondary battery comprises: an anode current collector, an anode material, an electrolyte, a separator, a cathode material, and a cathode current collector. The electrolyte is the electrolyte of the secondary battery as described in the above or the electrolyte prepared by the method for preparing the electrolyte of the secondary battery as described in the above.

In an embodiment, the cathode material comprises a lithium-supplementing additive that produces gas.

In an embodiment, the lithium-supplementing additive contains an oxygen element.

Beneficial effects of the electrolyte additive provided in embodiments of the present application are summarized as follows: the electrolyte additive comprises a radical trapping agent, in which, the radical trapping agent comprises at least one of the structural formula I and the structural formula II, and the provided structural formula I and the structural formula II of the radical trapping agent stably carry nitrogen free radicals or oxygen free radicals. Therefore, when used in the electrolyte, the electrolyte additive can consume harmful groups, such as CH₃· free radicals, acyl free radicals, and CH₃O· free radicals, generated during the charging and discharging process of the secondary battery, and can effectively inhibit the generation of active oxygen in the cathode additive of the secondary battery. In this way, the gas production phenomenon of the secondary battery during the charging and discharging process is effectively inhibited, the gas production volume is significantly reduced, and the volume expansion of the secondary battery is reduced, thereby effective improving the stability and safety of the charging and discharging of the secondary battery.

Beneficial effects of the electrolyte of the secondary battery provided in embodiments of the present application are summarized as follows: the provided secondary battery electrolyte comprises an electrolyte additive, which is a radical trapping agent and can combine with harmful groups, such as CH₃·free radicals, acyl free radicals, and CH₃O· free radicals, and can further effectively inhibit the generation of active oxygen. Therefore, in the process of assembling the battery for use, it is effectively solved the problem that the secondary battery is easy to produce gas during charging and discharging, which would otherwise affect the battery properties.

Beneficial effects of the preparation method of the electrolyte of the secondary battery provided in embodiments of the present application are summarized as follows: the preparation method can obtain the electrolyte by two-step mixing treatment method, and the preparation method is simple and conducive to widespread use.

Beneficial effects of the secondary battery provided in embodiments of the present application are summarized as follows: since the electrolyte included in the assembled secondary battery is an electrolyte comprising the above electrolyte additive, the obtained secondary battery during the cycle thereof will not have the volume expansion and gas production phenomenon, or expands rarely and produces little gas, thus having high cycle performance, high safety performance, and long service life.

### DETAILED DESCRIPTION OF THE EMBODIMENTS

In order to make the technical problems, technical solutions, and beneficial effects to be solved in the present application clearer, the present application will be further described in detail below in conjunction with the embodiments. It should be understood that the specific embodiments described here are only used to explain the present application, but are not intended to limit the present application.

It should be noted that "at least one" means one or more, and "multiple" means two or more. "At least one of the following" or similar expressions refers to any combination of these items, including any combination of single or plural items. For example, "at least one of a, b, or c", or "at least one of a, b, and c" can mean: a, b, c, a-b (that is, a and b), a-c, b-c, or a-b-c, in which, a, b, and c can be singular or plural.

It should be understood that in various embodiments of the present application, the sequence numbers of the above processes do not mean the order of execution, and some or all steps may be executed in parallel or sequentially, and the execution order of each process shall be determined based on its functions and internal logic and should not constitute any limitation to the implementation process of the embodiments of the present application.

The masses of the relevant components mentioned of the embodiments of the present application in the specification can not only refer to the specific contents of the component, but also represent the proportional relationship between the masses of the different components. The scaling up or down of the content of the fraction is within the scope disclosed the embodiments of the present application in the specification. Specifically, the mass described the embodiments of the present application in the specification may be µg, mg, g, kg and other well-known mass units in the chemical industry.

In order to illustrate the technical solution provided by the present application, the following is a detailed description in conjunction with specific drawings and embodiments.

A first aspect of embodiments of the present application provides an electrolyte additive. The electrolyte additive comprises a radical trapping agent. The radical trapping agent comprises at least one of a structural formula I and a structural formula II as follows: 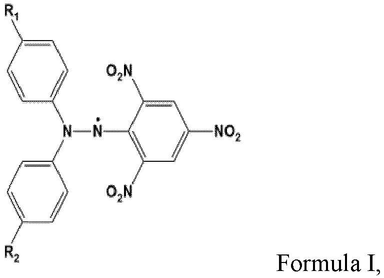 and

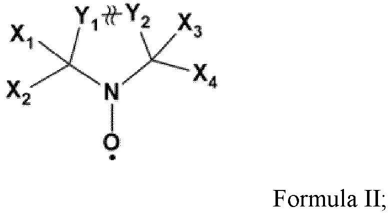

In which, in the structural formula I, R₁ and R₂ are same or different and respectively selected from a hydrogen atom or a C1-C10 alkyl; and in the structural formula II, X₁, X₂, X₃, and X₄ are same or different and respectively selected from a C1-C15 alkyl or a substituted C1-C15 alkyl, and Y₁ and Y₂ are same or different and respectively selected from any one atom of C, N, O, S, B, or Si, or a derivative group thereof.

The electrolyte additive provided in the first aspect of the embodiments of the present application comprises a radical trapping agent, in which, the radical trapping agent comprises at least one of the structural formula I and the structural formula II, and the provided structural formula I and the structural formula II of the radical trapping agent stably carry nitrogen free radicals or oxygen free radicals. Therefore, when used in the electrolyte, the electrolyte additive can consume harmful groups, such as CH₃· free radicals, acyl free radicals, and CH₃O· free radicals, generated during the charging and discharging process of the secondary battery, and can effectively inhibit the generation of active oxygen in the cathode additive of the secondary battery. In this way, the gas production phenomenon of the secondary battery during the charging and discharging process is effectively inhibited, the gas production volume is significantly reduced, and the volume expansion of the secondary battery is reduced, thereby effective improving the stability and safety of the charging and discharging of the secondary battery.

In an embodiment, the electrolyte additive comprises a radical trapping agent. The structural formula of the radical trapping agent is shown in Formula I: 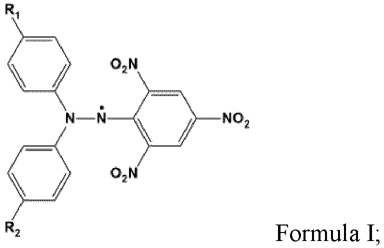 in which, R₁ and R₂ are same or different and respectively selected from a hydrogen atom or a C1-C10 alkyl. The radical trapping agent of the provided structural formula I contains nitrogen free radicals and three phenyls as the main chain structure. Under the action of the main chain structure containing three phenyls, the nitrogen free radicals can exist stably, ensuring that when being used in the electrolyte, the radical trapping agent can consume harmful groups, such as CH₃· free radicals, acyl free radicals, and CH₃O· free radicals, generated during the charging and discharging process of the secondary battery, and can effectively inhibit the generation of active oxygen in the cathode additive of the secondary battery. In this way, the gas production phenomenon of the secondary battery during the charging and discharging process is effectively inhibited, and the gas production volume is significantly reduced.

In an embodiment, in the structural formula I, in the structural formula I, R₁ and the R₂ are same or different and respectively selected from a C1-C5 alkyl. In a specific implementation, R₁ and the R₂ are same or different and respectively selected from at least one of a methyl, an ethyl, and a propyl.

In an embodiment, the electrolyte additive comprises a radical trapping agent. The radical trapping agent has a structural formula as shown in Formula II: 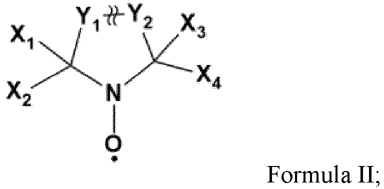 in Formula II, X₁, X₂, X₃, and X₄ are same or different and respectively selected from a C1-C15 alkyl or a substituted C1-C15 alkyl, and Y₁ and Y₂ are same or different and respectively selected from any one atom of C, N, O, S, B, or Si, or a derivative group thereof. The radical trapping agent of Formula II provided contains oxygen free radicals, and Formula II contains a heterocyclic structure. Under the action of the heterocyclic structure, the oxygen free radicals can exist stably, ensuring that when being used in the electrolyte, the radical trapping agent can consume harmful groups, such as CH₃· free radicals, acyl free radicals, and CH₃O· free radicals, generated during the charging and discharging process of the secondary battery, and can effectively inhibit the generation of active oxygen in the cathode additive of the secondary battery. In this way, the gas production phenomenon of the secondary battery during the charging and discharging process is effectively inhibited, and the gas production volume is significantly reduced.

In an embodiment, the structural formula II comprises at least one of the following structural formulas II₁-II₄: 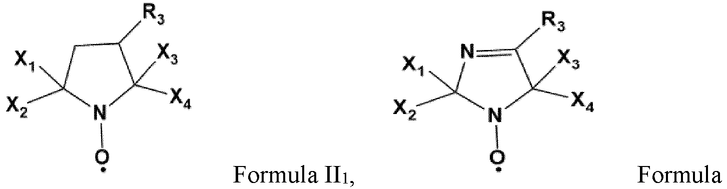 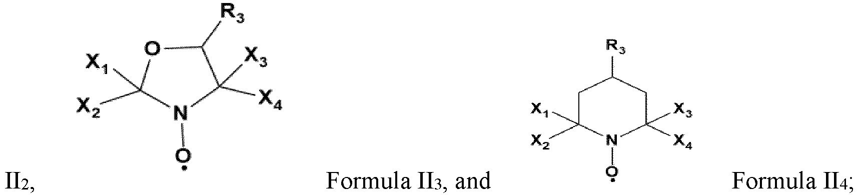 in which, R₃ is selected from any one of a hydrogen atom, a C1-C5 alkyl, a hydroxyl, a carboxyl, and a phenyl.

In an embodiment, in the structural formula II, X₁, X₂, X₃, and X₄ are same or different and respectively selected from a C1-C10 alkyl. In a specific embodiment, X₁, X₂, X₃, and X₄ are same or different and respectively selected from at least one of a methyl, an ethyl, and a propyl.

In an embodiment, X₁, X₂, X₃, and X₄ are same or different and respectively selected from a substituted C1-C10 alkyl. In a specific embodiment, a substituent of the substituted C1-C15 alkyl comprises any one of a C1-C15 alkenyl, a carbon group, and an ether group.

In some embodiments, the radical trapping agent comprises at least one of the following structural formulas III₁-III₅:

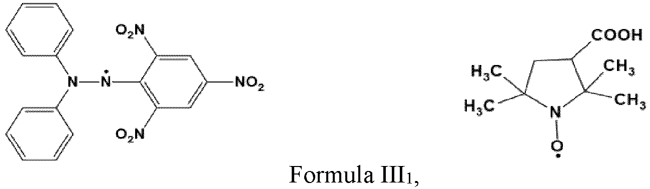

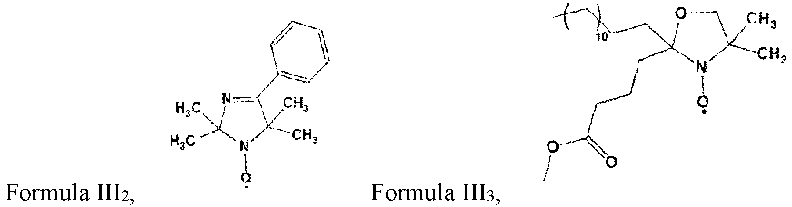

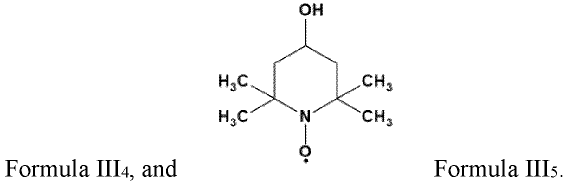

The electrolyte additive provided comprises the radical trapping agent, in which, the radical trapping agent comprises at least one of the structural formulas III₁-III₅, and radical trapping agent stably carry nitrogen free radicals or oxygen free radicals. Therefore, when used in the electrolyte, the electrolyte additive can consume harmful groups, such as CH₃· free radicals, acyl free radicals, and CH₃O· free radicals, generated during the charging and discharging process of the secondary battery, and can effectively inhibit the generation of active oxygen in the cathode additive of the secondary battery. In this way, the gas production phenomenon of the secondary battery during the charging and discharging process is effectively inhibited, the gas production volume is significantly reduced, and the volume expansion of the secondary battery is reduced, thereby effective improving the stability and safety of the charging and discharging of the secondary battery.

In a second aspect, embodiments of the present application provide an electrolyte of a secondary battery, the electrolyte comprises: a metal salt electrolyte, an organic solvent, and an electrolyte additive; in which, the electrolyte additive is selected from the electrolyte additive as described in the above.

The electrolyte of the secondary battery provided in the second aspect of the embodiment of the present application comprises the above electrolyte additive, which is a radical trapping agent and can combine with harmful groups, such as CH₃· free radicals, acyl free radicals, and CH₃O· free radicals, and can further effectively inhibit the generation of active oxygen. Therefore, in the process of assembling the battery for use, it is effectively solved the problem that the secondary battery is easy to produce gas during charging and discharging, which would otherwise affect the battery properties.

In an embodiment, based on a total mass of the electrolyte being 100 wt.%, a mass percentage of the electrolyte additive is 0.1 wt.% to 15 wt.%. If the content of the electrolyte additive is too much, the electrolyte additive cannot be completely dissolved in the electrolyte, and the mobility of lithium, sodium, and potassium ions will be reduced, thereby reducing the performance of lithium, sodium, and potassium ion batteries; and if the content of the electrolyte additive is too little, the electrolyte additive will not play a corresponding role. In a specific embodiment, based on the total mass of the electrolyte being 100 wt.%, the mass percentage of the electrolyte additive is 1 wt.% to 10 wt.%.

In an embodiment, the metal salt electrolyte comprises any one of a lithium salt electrolyte, a sodium salt electrolyte, and a potassium salt electrolyte. Different metal salt electrolytes are selected according to the different batteries to be obtained.

In an embodiment, a concentration of the metal salt electrolyte is 0.1 mol•L⁻¹ to 10 mol•L⁻¹. In a specific embodiment, the concentration of the metal salt electrolyte is 1 mol•L⁻¹.

In a specific embodiment, the lithium secondary battery to be obtained adopts a lithium salt electrolyte. The lithium salt electrolyte includes but is not limited to one or more of lithium perchlorate (LiClO₄), lithium tetrafluoroborate (LiBF₄), lithium hexafluoroarsenate (LiAsF₆), lithium hexafluorophosphate (LiPF₆), lithium bis(oxalate)borate (LiBOB), lithium difluoro(oxalate)borate (LiDFOB), lithium bis(difluorosulfonyl)imide (LiFSI), and lithium bis(trifluoromethylsulfonyl)imide (LiTFSI).

In a specific embodiment, a sodium secondary battery to be obtained adopts a sodium salt electrolyte. The sodium salt electrolyte includes but is not limited to one or more of sodium trifluoromethanesulfonate (NaCF₃SO₃), sodium bis(trifluoromethylsulfonyl)imide [NaN(CF₃SO₂)₂] and a derivative thereof, sodium perfluoroalkyl phosphate [NaPF₃(C₂F₅)₃], sodium tetrafluorooxalate phosphate [NaPF₄(C₂O₄)], sodium bis(oxalate)borate [NaB(C₂O₄)₂], sodium tri(catechol) phosphate (NTBP), sodium sulfonated polysulfonamide, sodium hexafluorophosphate (NaPF₆), sodium perchlorate (NaClO₄), sodium tetrafluoroborate (NaBF₄), sodium hexafluoroarsenate (NaAsF₆), sodium nitrate (NaNO₃), sodium carbonate (NaCO₃), and sodium chloride (NaCl).

In a specific embodiment, a potassium secondary battery to be obtained adopts a potassium salt electrolyte. The potassium salt electrolyte includes but is not limited to one or more of potassium trifluoromethanesulfonate (KCF₃SO₃), potassium bis(trifluoromethylsulfonyl)imide [KN(CF₃SO₂)₂] and a derivative thereof, potassium perfluoroalkyl phosphate [KPF₃(C₂F₅)₃], potassium tetrafluorooxalate phosphate [KPF₄(C₂O₄)], potassium bis(oxalate)borate [KB(C₂O₄)₂], potassium tri(catechol) phosphate, potassium sulfonated polysulfonamide, potassium hexafluorophosphate (KPF₆), potassium perchlorate (KClO₄), potassium tetrafluoroborate (KBF₄), potassium hexafluoroarsenate (KAsF₆), potassium nitrate (KNO₃), potassium carbonate (KCO₃), and potassium chloride (KCl).

In an embodiment, the organic solvent comprises at least one of an ester organic solvent, a sulfone organic solvent, an ether organic solvent, a nitrile organic solvent, or an ionic liquid organic solvent

In a specific embodiment, the organic solvent includes but is not limited to at least one of the following: propylene carbonate (PC), ethylene carbonate (EC), diethyl carbonate (DEC), dimethyl carbonate (DMC), ethyl methyl carbonate (EMC), methyl formate (MF), methyl acetate (MA), N,N-dimethylacetamide (DMA), fluoroethylene carbonate (FEC), methyl propionate (MP), ethyl propionate (EP), ethyl acetate (EA), γ-butyrolactone (GBL), tetrahydrofuran (THF), -methyltetrahydrofuran (2MeTHF), 1,3-dioxolane (DOL), 4-methyl-1,3-dioxolane (4MeDOL), dimethoxymethane (DMM), 1,2-dimethoxypropane (DMP), triethylene glycol dimethyl ether (TEGDME), diethylene glycol dimethoxy (DME), ethylene sulfite (ES), propylene sulfite (PS), dimethyl sulfite (DMS), diethyl sulfite (DES), crown ether (12-crown-4), 1-ethyl-3-methylimidazolium hexafluorophosphate, 1-ethyl-3-methylimidazolium tetrafluoroborate, 1-ethyl-3-methylimidazolium-bis(trifluoromethylsulfonyl)imide, 1-propyl -3-methylimidazolium hexafluorophosphate, 1-propyl-3-methylimidazolium tetrafluoroborate, 1-propyl-3-methylimidazolium-bis(trifluoromethylsulfonyl)imide, 1-butyl -3-methylimidazolium hexafluorophosphate, 1-butyl-3-methylimidazolium tetrafluoroborate, 1-butyl-3-methylimidazolium-bis(trifluoromethylsulfonyl)imide, N-butyl-N-methylpyrrolidinium-bis(trifluoromethylsulfonyl)imide, 1-butyl-1-methylpyrrolidinium-bis(trifluoromethylsulfonyl)imide, N-methyl-N-propylpyrrolidinium-bis(trifluoromethylsulfonyl)imide, N-methyl-N-propylpiperidinium-bis(trifluoromethylsulfonyl)imide, and N-methyl-N-butylpiperidinium-bis(trifluoromethylsulfonyl)imide.

In an embodiment, based on a total mass of the electrolyte being 100%, a mass percentage of the metal salt electrolyte is 10 wt.% to 30 wt.%, and a mass percentage of the organic solvent is 55 wt.% to 75 wt.%.

In a third aspect, embodiments of the present application provide a method for preparing an electrolyte of a secondary battery. The method comprises the following steps:
step S01, providing a metal salt electrolyte, an organic solvent, and the electrolyte additive according to the electrolyte of the second battery;
step S02, performing a first mixing treatment on the organic solvent and the electrolyte additive to obtain an electrolyte additive solution; and
step S03, performing a second mixing treatment of the metal salt electrolyte and the electrolyte additive solution to obtain the electrolyte of the secondary battery.

In the preparation method of the electrolyte of the secondary battery provided by the first aspect of embodiments of the present application, the preparation method can obtain the electrolyte by two-step mixing treatment method, and the preparation method is simple and conducive to widespread use.

In step S01, a metal salt electrolyte, an organic solvent, and an electrolyte additive are provided according to the electrolyte of the secondary battery. The types of the provided metal salt electrolyte, the organic solvent, and the electrolyte additive are as listed in the above, and will not repeated herein in order to save space.

In step S02, the organic solvent and the electrolyte additive are subjected to a first mixing treatment to obtain an electrolyte additive solution, and the first mixing treatment includes but is not limited to stirring, etc., in order to completely dissolve the electrolyte additive.

In step S03, the metal salt electrolyte and the electrolyte additive solution are subjected to a second mixing treatment to obtain an electrolyte of a secondary battery. The second mixing treatment includes but is not limited to stirring, etc., and is for the purpose of mixing the components evenly, so that the components in the obtained electrolyte are evenly mixed.

In a fourth aspect, the present application provides a secondary battery. The secondary battery comprises: an anode current collector, an anode material, an electrolyte, a separator, a cathode material, and a cathode current collector. The electrolyte is the electrolyte of the secondary battery as described in the above or the electrolyte prepared by the method for preparing the electrolyte of the secondary battery as described in the above.

In the secondary battery provided in the fourth aspect of the embodiments of the present application, since the electrolyte included in the assembled secondary battery is an electrolyte comprising the above electrolyte additive, the obtained secondary battery during the cycle thereof will not have the volume expansion and gas production phenomenon, or expands rarely and produces little gas, thus having high cycle performance, high safety performance, and long service life.

In an embodiment, the anode current collector includes but is not limited to at least one of aluminum, copper, titanium, a stainless steel, and a nickel foil.

In an embodiment, the anode material includes but is not limited to one or more of a NASICON type material, a conversion type and alloying type material, an organic material, and a carbon-based material.

In an embodiment, the separator includes but is not limited to at least one of an insulating porous polymer film and an inorganic porous film. Further, the separator includes but is not limited to one or more of a porous polypropylene film, a porous polyethylene film, a porous composite polymer film, a glass fiber paper, and a porous ceramic separator.

In an embodiment, the cathode material includes but is not limited to a material containing a transition metal salt.

In an embodiment, the cathode material comprises a lithium-supplementing additive that produces gas.

In an embodiment, the lithium-supplementing additive contains an oxygen element.

In an embodiment, the cathode current collector includes but is not limited to at least one of an aluminum foil, a carbon-coated aluminum foil, an iron foil, a tin foil, a zinc foil, a nickel foil, a titanium foil, and a manganese foil.

The following is an explanation in conjunction with specific embodiments.

### Examples of Electrolyte

### Example A1-Example A5

The components contained in each electrolyte in Example A1 to Example A5 are respectively provided, as shown in Table 1 below. Specifically, the electrolyte in Example A1 contains an electrolyte additive of molecular structure III₁, and the electrolyte in Example A2 contains an electrolyte additive of molecular structure III₂, and so on. The concentrations of the components in the electrolyte are respectively as listed in Table 1.

The electrolytes in various examples were prepared as follows:
According to types and contents of the components contained in Example A1 to Example A5, basic components ethylene carbonate(EC), ethyl methyl carbonate (EMC), and propylene carbonate (PC) were mixed at a mass ratio of EC:EMC:PC=1.5:8:0.5, and then a lithium salt was added to form lithium hexafluorophosphate (LiPF₆) having a concentration of 1.0 mol/L, and stirred until LiPF₆ was completely dissolved; thereafter, a compound having a content accounting for 1 wt.% of a total mass of the electrolyte was added and stirred until being completely dissolved whereby obtaining a corresponding electrolyte in each example.

### Comparative Example A1

The Comparative Example A1 provides an electrolyte, the components of which are listed in Table 1 hereinbelow. Specifically, the electrolyte of Comparative Example A1 was prepared as follows:
According to types and contents of the components contained in Comparative Example A1, basic components ethylene carbonate(EC), ethyl methyl carbonate (EMC), and propylene carbonate (PC) were mixed at a mass ratio of EC:EMC:PC=1.5:8:0.5, and then a lithium salt was added to form lithium hexafluorophosphate (LiPF₆) having a concentration of 1.0 mol/L, and stirred until LiPF₆ was completely dissolved whereby obtaining a corresponding electrolyte of Comparative Example A1.

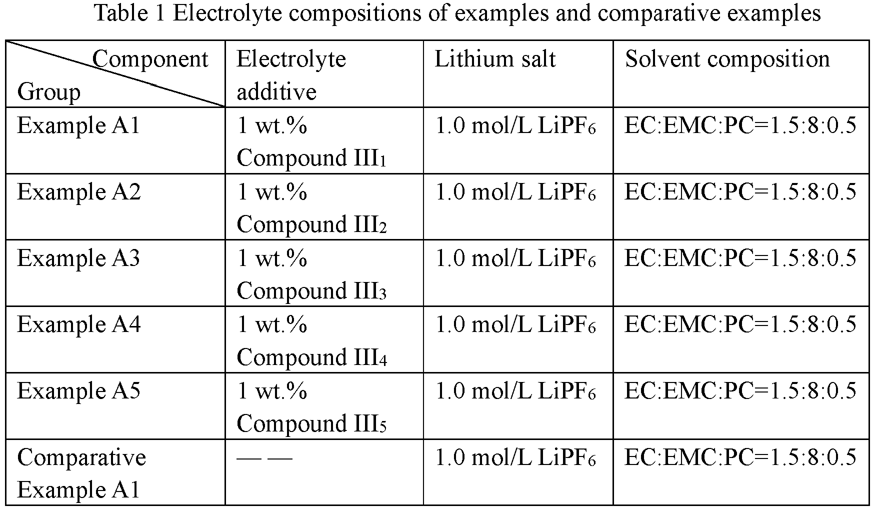

### 3. Examples of Lithium-ion battery

### Examples B1 to B6 and Comparative Example B1

Examples B1 to B6 and Comparative Example B1 provide lithium-ion batteries respectively. Each lithium-ion battery was assembled according to the following method:
1) Cathode plate:
   Cathode plates of Examples B1 to B6 and Comparative Example B1 each were prepared as follows: LiFePO₄ as a cathode active material, a Super P as a conductive agent, a polyvinylidene fluoride (PVDF) as a binder, and N-methylpyrrolidone (NMP) were uniformly mixed to form a cathode slurry, in which, a mass ratio of LiFePO₄: Super P: PVDF was 95:2:3. The cathode slurry was then coated on an aluminum foil as a current collector, which was thereafter subjected to drying-rolling-secondary drying process, so as to obtain the cathode plate. The cathode plate of Example B6 contains Li₅FeO₄ as a lithium-supplementing additive, and a mass ratio of Li₅FeO₄ : LiFePO₄: Super P: PVDF was 2:93:2:3.
2) Anode plate: graphite as an anode active material, the Super P as the conductive agent, a carboxymethyl cellulose (CMC) as a thickener, and a styrene butadiene rubber (SBR) as a binder were uniformly mixed in deionized water to form an anode slurry, in which, a mass ratio of graphite: Super P: CMC: SBR was 95:2:0.5:2.5. The anode slurry was then coated on a copper foil as a current collector, which was thereafter subjected to drying-rolling-secondary drying process so as to obtain the anode plate.
3) Separator: a polyethylene (PE) was adopted as the separator.
4) Electrolyte:
   The electrolytes provided in Examples A1 to A5 and Comparative Example A1 were used as the electrolytes for the secondary batteries, respectively. Specifically, the electrolyte provided in Example A1 was used as the electrolyte of the secondary battery in Example B1, and the electrolyte provided in Example A2 was used as the electrolyte of the secondary battery in Example B2. Similarly, the electrolyte provided in Comparative Example A1 was used as the electrolyte of the secondary battery in Comparative Example B1, and the electrolyte provided in Comparative Example A2 was used as the electrolyte of the secondary battery in Comparative Example B2. In particular, the electrolyte of the secondary battery in Example B6 was the electrolyte provided in Example A1.
5) Assembly of secondary battery:
   The above-mentioned cathode plate, anode plate, electrolyte, and separator were assembled into a lithium-ion soft-pack battery according to the requirements for lithium-ion battery assembly.
6) Performance tests of lithium-ion battery:

The lithium-ion batteries in various examples assembled in Section 5) were subjected to the following performance tests:
Normal temperature cycle test: the battery was placed at 25°C and charged and discharged at a current of 1 C in the charge and discharge voltage range of 3.0 V to 4.4V. An initial thickness was recorded as T₀ and an initial capacity was recorded as Q₀. The thickness after 300 cycles was recorded as T₁ and the capacity was recorded as Q₁. A thickness change rate and a capacity retention rate of the battery after 300 cycles at room temperature were calculated by the following formulas:
Thickness change rate (%) after 300 cycles at room temperature = (T1- T0)/T0 × 100%;
Capacity retention rate (%) after 300 cycles at room temperature = Q1/Q0×100%.

High temperature cycle test: the battery was placed at a high temperature of 45°C and charged and discharged at a current of 1 C in the charge and discharge voltage range of 3.0 V to 4.4V. An initial thickness was recorded as T₂ and an initial capacity was recorded as Q₂. The thickness after 300 cycles was recorded as T₃ and the capacity was recorded as Q₃. A thickness change rate and a capacity retention rate of the battery after 300 cycles at high temperature (45°C) were calculated by the following formulas:
Thickness change rate (%) after 300 cycles at high temperature (45°C) = (T3- T2)/T2 × 100%;
Capacity retention rate (%) after 300 cycles at high temperature (45°C) = Q3/Q2× 100%.

The relevant performance test results are listed in Table 2 below:

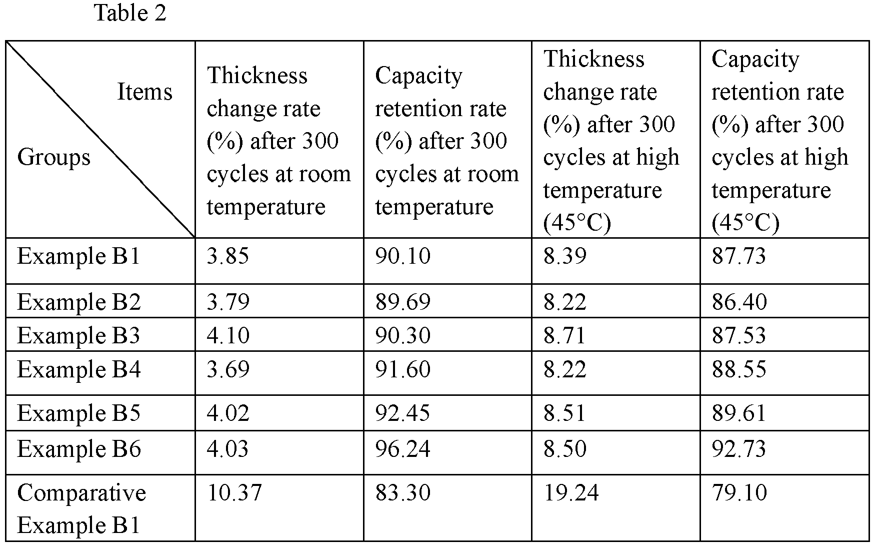

From the test results in Table 2, it can be seen that in Comparative Example B1, the thickness change rate and capacity retention rate after 300 cycles at room temperature are 10.37% and 83.30% respectively, and the thickness change rate and capacity retention rate after 300 cycles at high temperature (45°C) are 19.24% and 79.10%, respectively. The thickness change rate from room temperature to high temperature (45°C) increases by 8.87%. In Example B1 to Example B6, due to the presence of a small amount of electrolyte additive compounds of the present application, the thickness change rates after 300 cycles at room temperature are much smaller than that of Comparative Example B 1, so the capacity retention rates are above 90%, even after 300 cycles at high temperature (45°C), the thickness change rates are still less than 10%. By comparing Example B1 with Example B6, it is found that even if Example B6 contains a lithium supplement that produces gas, thickness change rates (%) after 300 cycles at normal temperature and high temperature are basically the same as those in Example B 1, and the capacity retention rates (%) after 300 cycles at normal temperature and high temperature are both higher than those in Example B1 which does not containing lithium-supplementing additive. In view of this, it is indicated that the electrolyte additive compound of the present application can not only inhibit the gas production phenomenon in the cathode material, but also inhibit the generation of active oxygen in the lithium-supplementing additive of the cathode material, thereby reducing the gas production of the lithium secondary battery and reducing the volume expansion of the lithium secondary battery, and effectively improving the stability and safety of the lithium secondary battery during the charging and discharging process.

The above description is only preferred embodiments of the present application and is not intended to limit the present application. For those skilled in the art, the present application can have various modifications and changes. Any modifications, equivalent substitutions, and improvements made within the spirit and principles of the present application should fall within the protection scope of the present application.

## Claims

1. An electrolyte additive, **characterized in that** the electrolyte additive comprises a radical trapping agent, wherein the radical trapping agent comprises at least one of a structural formula I and a structural formula II as follows: 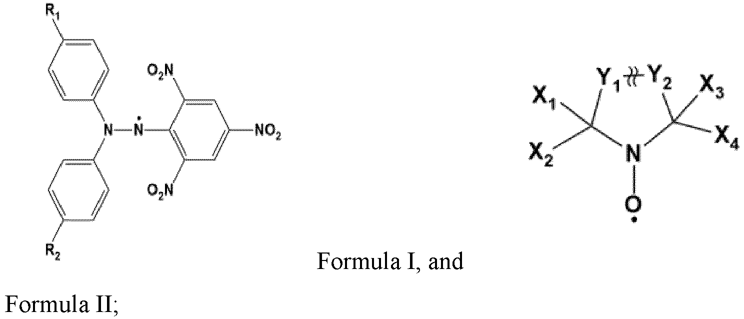 wherein, in the structural formula I, R₁ and R₂ are same or different and respectively selected from a hydrogen atom or a C1-C10 alkyl; and in the structural formula II, X₁, X₂, X₃, and X₄ are same or different and respectively selected from a C1-C15 alkyl or a substituted C1-C15 alkyl, and Y₁ and Y₂ are same or different and respectively selected from any one atom of C, N, O, S, B, or Si, or a derivative group thereof.

2. The electrolyte additive according to claim 1, wherein the structural formula II comprises at least one of the following structural formulas II₁-II₄: 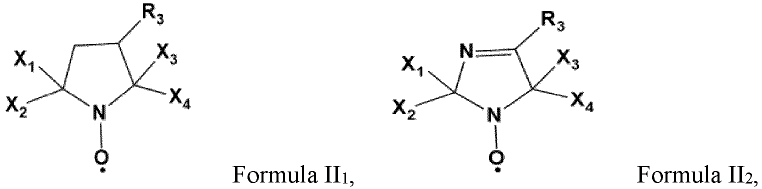 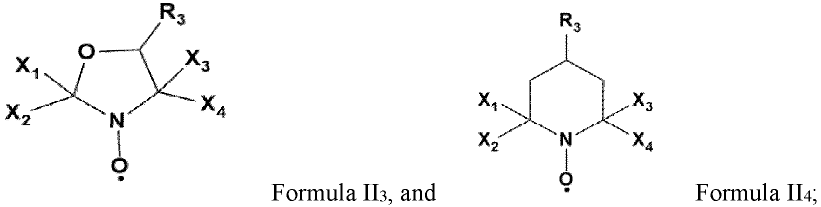 wherein, R₃ is selected from any one of a hydrogen atom, a C1-C5 alkyl, a hydroxyl, a carboxyl, and a phenyl.

3. The electrolyte additive according to claim 1, wherein in the structural formula I, R₁ and the R₂ are same or different and respectively selected from a C1-C5 alkyl.

4. The electrolyte additive according to claim 3, wherein in the structural formula I, R₁ and the R₂ are same or different and respectively selected from at least one of a methyl, an ethyl, and a propyl.

5. The electrolyte additive according to claim 1, wherein in the structural formula II, X₁, X₂, X₃, and X₄ are same or different and respectively selected from a C1-C10 alkyl.

6. The electrolyte additive according to claim 5, wherein in the structural formula II, X₁, X₂, X₃, and X₄ are same or different and respectively selected from at least one of a methyl, an ethyl, and a propyl.

7. The electrolyte additive according to claim 1, wherein in the structural formula II, X₁, X₂, X₃, and X₄ are same or different and respectively selected from a substituted C1-C10 alkyl.

8. The electrolyte additive according to claim 1, wherein a substituent of the substituted C1-C15 alkyl comprises any one of a C1-C15 alkenyl, a carbon group, and an ether group.

9. The electrolyte additive according to claim 1, wherein the radical trapping agent comprises at least one of the following structural formulas III₁-III₅: 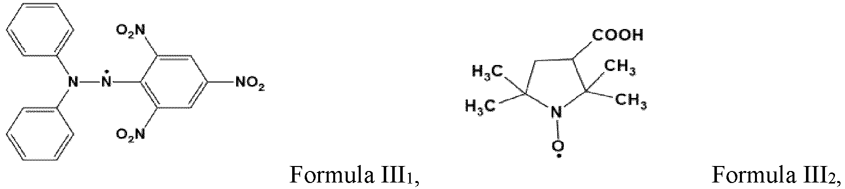 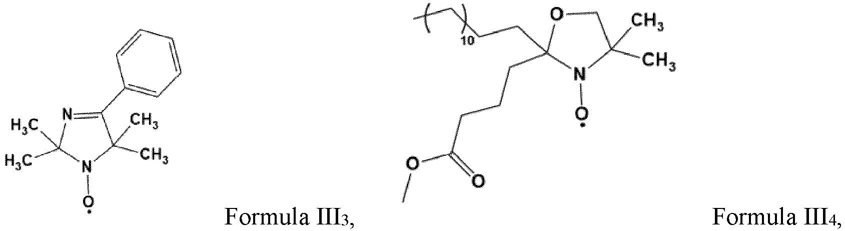 and

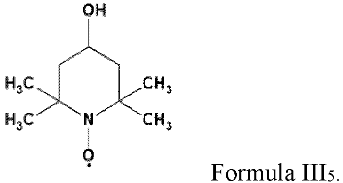

10. An electrolyte of a secondary battery, **characterized in that** the electrolyte comprises: a metal salt electrolyte, an organic solvent, and an electrolyte additive, wherein the electrolyte additive is selected from the electrolyte additive according to any one of claims 1-9.

11. The electrolyte of the secondary battery according to claim 10, wherein based on a total mass of the electrolyte being 100 wt.%, a mass percentage of the electrolyte additive is 0.1 wt.% to 15 wt.%.

12. The electrolyte of the secondary battery according to claim 11, wherein based on the total mass of the electrolyte being 100 wt.%, the mass percentage of the electrolyte additive is 1 wt.% to 10 wt.%.

13. The electrolyte of the secondary battery according to claim 10, wherein the metal salt electrolyte comprises any one of a lithium salt electrolyte, a sodium salt electrolyte, and a potassium salt electrolyte.

14. The electrolyte of the secondary battery according to claim 13, wherein a concentration of the metal salt electrolyte is 0.1 mol•L⁻¹ to 10 mol•L⁻¹.

15. The electrolyte of the secondary battery according to claim 10, wherein the organic solvent comprises at least one of an ester organic solvent, a sulfone organic solvent, an ether organic solvent, a nitrile organic solvent, or an ionic liquid organic solvent.

16. The electrolyte of the secondary battery according to claim 10, wherein based on a total mass of the electrolyte being 100%, a mass percentage of the metal salt electrolyte is 10 wt.% to 30 wt.%, and a mass percentage of the organic solvent is 55 wt.% to 75 wt.%.

17. A method for preparing an electrolyte of a secondary battery, **characterized by** comprising the following steps:
providing a metal salt electrolyte, an organic solvent, and the electrolyte additive according to any one of claims 1-9;
performing a first mixing treatment on the organic solvent and the electrolyte additive to obtain an electrolyte additive solution; and
performing a second mixing treatment of the metal salt electrolyte and the electrolyte additive solution to obtain the electrolyte of the secondary battery.

18. A secondary battery, **characterized in that** the secondary battery comprises: an anode current collector, an anode material, an electrolyte, a separator, a cathode material, and a cathode current collector; wherein the electrolyte is the electrolyte of the secondary battery according to any one of claims 10-16 or the electrolyte prepared by the method for preparing the electrolyte of the secondary battery according to claim 17.

19. The secondary battery according to claim 18, wherein the cathode material comprises a lithium-supplementing additive that produces gas.

20. The secondary battery according to claim 19, wherein the lithium-supplementing additive contains an oxygen element.
